# EUROPÄISCHE PATENTSCHRIFT

(11) **EP 3 033 230 B1**
(45) Veröffentlichungstag und Bekanntmachung des Hinweises auf die Patenterteilung: **09.08.2017**
(21) Anmeldenummer: 14731237.5
(22) Anmeldetag: 17.06.2014
(51) Int. Cl.: B32B 25/10, B32B 25/14, B32B 25/18, B32B 1/08, F16L 11/08, F16L 11/127, F16L 53/00, F16L 11/04

(54) **SCHLAUCH, INSBESONDERE SCR-SCHLAUCH**
HOSE, IN PARTICULAR SCR HOSE
FLEXIBLE, EN PARTICULIER FLEXIBLE DE RÉDUCTION CATALYTIQUE SÉLECTIVE (SCR)

(30) Priorität: 15.08.2013 DE 102013108853
(43) Veröffentlichungstag der Anmeldung: 22.06.2016
(73) Patentinhaber: ContiTech Schlauch GmbH, 30165 Hannover (DE)
(72) Erfinder: DÖRING, Lars, 34497 Korbach (DE); GRÖTEKE, Dirk, 35104 Lichtenfels (DE)
(74) Vertreter: Preusser, Andrea
(86) Internationale Anmeldenummer: PCT/EP2014/062610
(87) Internationale Veröffentlichungsnummer: WO 2015/022104

(56) Entgegenhaltungen:
- EP-A1- 2 214 176
- EP-A2- 1 329 660
- WO-A1-2009/095941
- DE-A1- 19 915 228
- DATABASE WPI Week 201232 Thomson Scientific, London, GB; AN 2012-B17112 XP002730327, -& CN 102 305 319 A (NINGBO FENGMAO AUTOMOBILE PARTS CO LTD) 4. Januar 2012 (2012-01-04)

## Beschreibung

Die Erfindung betrifft einen Schlauch, insbesondere einen SCR-Schlauch.

Schläuche, die flüssige, Chemikalien enthaltende Medien transportieren, müssen in der Praxis eine Reihe von Anforderungen erfüllen. So müssen sie natürlich undurchlässig für das zu transportierende Medium sein. Ferner soll der Schlauch chemische Beständigkeit gegen das Medium aufweisen und ein geringes Quellvermögen bei Anwesenheit des Mediums zeigen. Desweiteren soll der Schlauch möglichst flexibel und druckbeständig sein.

Die selektive katalytische Reduktion (SCR, selective catalytic reduction) bezeichnet eine Technik zur Reduktion von Stickoxiden in Abgasen, z.B. von Feuerungsanlagen, Müllverbrennungsanlagen, Gasturbinen, Industrieanlagen und Motoren. Hierfür wird ein sogenannter SCR-Katalysator eingesetzt, mit dem Stickoxide selektiv reduziert werden können. Für die Reaktion wird Ammoniak benötigt, das dem Abgas z.B. in Form einer Harnstofflösung zugemischt wird.

In Europa und auch andernorts müssen Fahrzeuge immer strengere Abgasnormen erfüllen. Für die Abgasnachbehandlung von Fahrzeugmotoren, insbesondere Dieselmotoren, wurde daher ein auf dem SCR-Verfahren basierendes System zur Reduktion von Stickoxiden im Abgas entwickelt. Hierbei werden im Abgas vorhandene Stickoxide mit Hilfe einer Harnstofflösung und des SCR-Katalysators in Wasserdampf und Stickstoff umgewandelt. Die flüssige Harnstofflösung muss dabei in einem separaten Tank mitgeführt werden und wird im Betrieb mittels einer Schlauchleitung über eine Dosiereinheit in das Abgas eingespritzt.

SCR-Systeme werden in Nutzfahrzeugen wie Lkws und Omnibussen und teilweise auch für Pkws in der Praxis eingesetzt. Hierfür wird eine ungefähr 32,5-prozentige wässrige Harnstofflösung verwendet, deren Spezifikationen in Normen wie ISO 22241 und DIN 70070 festgelegt sind und die in Europa unter der Bezeichnung AdBlue^{®} vertrieben wird. In Nordamerika wird die Bezeichnung Diesel Exhaust Fluid (DEF) verwendet.

Die Leitungssysteme sind so auszulegen, dass möglichst keine Stoffe aus den Materialien der Leitungssysteme extrahiert werden, die die Harnstofflösung verunreinigen können. Eine technische Herausforderung bei Einsatz in Pkws ist außerdem der zur Verfügung stehende Raum zur Installation, der in der Regel sehr begrenzt ist. Dies erfordert Schlauchsysteme, die den vorgegebenen Geometrieanforderungen gerecht werden, z.B. enge Biegeradien erlauben.

Ein weiteres Problem bei Einsatz solcher Harnstofflösungen ist der relativ hohe Gefrierpunkt von etwa -11°C. Längere Standzeiten und Kälteperioden gefährden daher die Leistungsfähigkeit des Systems. Um das Einfrieren sicher zu verhindern, wurden daher beheizbare Leitungssysteme entwickelt. In der DE-A1-10201920 wird z.B. ein mehrschichtiger beheizbarer Schlauch beschrieben, in den elektrische Heizleiter eingebaut sind.

Bei einem beheizbaren Schlauch ist der Schutz des Heizleiters durch eine isolierende Ummantelung wichtig. Dies verhindert, dass Feuchtigkeit an den Heizleiter gelangt, die zur Korrosion und schließlich zur Zerstörung des Heizleiters führt. Es hat sich gezeigt, dass bereits kleinste Schäden der Isolation zu Schwachstellen im Produkt führen.

Um Isolationsfehler auszuschließen, werden entsprechende Schlauchprodukte daher mit einem sogenannten Sparktester geprüft. Hierbei werden hohe Spannungen an den Schlauch angelegt. Sofern dabei Durchschläge zum metallischen Leiter aufgezeichnet werden, weist dies auf einen Isolationsfehler hin. Auf diese Weise können fehlerhafte Schlauchteile aussortiert werden. Die Prüfung mit einem Sparktester setzt aber voraus, dass elektrisch leitfähige Materialien oder Schichten im System nicht derart enthalten sind, dass sie die Prüfung stören.

Gegebenenfalls sind daher isolierende Schichten erforderlich, um die Heizleiter von elektrisch leitfähigen Schichten elektrisch zu isolieren. Hierfür ist häufig ein komplexer Aufbau erforderlich, z.B. der Einsatz eines zweischichtigen Innengummis. Die Herstellung solcher Systeme ist daher häufig aufwendig und damit kostspielig.

CN 102 305 319 A offenbart einen Schlauch umfassend eine Innenschicht aus einer vulkanisierten Ethylen-Propylen-Dien-Kautschuk, eine Festigkeitsträgerlage und eine Außenschicht aus einer vulkanisierten Kautschukmischung enthaltend Ethylen-Propylen-Dien-Kautschuk.

Die Aufgabe der Erfindung bestand in der Bereitstellung eines Schlauchs, der insbesondere für die Verwendung bei SCR-Anwendungen geeignet ist und die vorstehend genannten Schwierigkeiten überwindet. Insbesondere soll ein flexibler und permeationsdichter Schlauch bereitgestellt werden, der gegen Chemikalien beständig ist und eine geringe Quellrate aufweist, insbesondere im Hinblick auf zu transportierende wässrige Harnstofflösungen, die im SCR-Verfahren eingesetzt werden. Darüber hinaus sollte auch eine verbesserte Temperaturbeständigkeit des Schlauchs ermöglicht werden.

Desweiteren soll der Schlauch auch als beheizbarer Schlauch gestaltet werden können, wobei die Prüfung des Heizleiters im Schlauch mit Hilfe eines Sparktesters auf mögliche Isolationsfehler möglich ist. Überdies soll der Schlauchaufbau möglichst einfach sein, um einen optimierten Fertigungsprozess und damit eine möglichst kostengünstige Herstellung zu ermöglichen. Der Schlauch soll vorzugsweise durch ein kontinuierliches Verfahren herstellbar sein.

Diese Aufgabe wurde überraschenderweise durch einen Schlauch gelöst, der in dieser Reihenfolge a) ein isolierendes Innengummi aus einer vulkanisierten Kautschukmischung enthaltend einen Verschnitt aus Ethylen-Propylen-Dien-Kautschuk und Chlorbutylkautschuk, b) mindestens eine Festigkeitsträgerlage und c) ein Außengummi aus einer vulkanisierten Kautschukmischung enthaltend Ethylen-Propylen-Dien-Kautschuk umfasst. In einer bevorzugten Ausführungsform umfasst der Schlauch auch mindestens einen elektrischen Heizleiter, der zwischen Innengummi und Außengummi, vorzugsweise zwischen der Festigkeitsträgerlage oder den Festigkeitsträgerlagen und dem Außengummi, angeordnet ist. Auf diese Weise wird ein beheizbarer Schlauch erhalten.

Es wird ein flexibler, permeationsdichter, chemikalienbeständiger und quellstabiler Schlauch bereitgestellt, insbesondere gegenüber Harnstofflösungen, wie sie z.B. im SCR-Verfahren verwendet werden. Der Schlauch weist vorzugsweise eine verbesserte Temperaturbeständigkeit auf und das Außengummi ist gegen Verfärbungen besser geschützt.

Der Aufbau des für SCR-Anwendungen geeigneten Schlauchs ist außerdem relativ einfach, so dass ein vereinfachter Fertigungsprozess ohne Herstellung einer zweiten Innenschicht oder Zwischenschicht möglich ist. Die Schläuche können daher in einem kontinuierlichen Verfahren hergestellt werden. Die Prüfung des mit elektrischen Heizleitern versehenen Schlauchs mit einem Sparktester ist möglich. Hierfür ist keine zusätzliche Zwischenschicht erforderlich. Das Herauslösen des Heizleiters für Anschlusszwecke kann ohne weiteres bewerkstelligt werden.

Bevorzugte Ausführungsformen des Schlauchs sind in den abhängigen Ansprüchen angegeben. Im Folgenden wird die Erfindung ausführlich erläutert.

Eine Kautschukmischung umfasst ein oder mehrere Kautschuke und gegebenenfalls ein oder mehrere Füllstoffe, ein Vernetzersystem und weitere Additive. Unter der Kautschukkomponente der Kautschukmischung wird die Gesamtmenge aller in der Kautschukmischung enthaltenen Kautschuke verstanden. Eine vulkanisierte Kautschukmischung enthaltend einen Kautschuk bezieht sich auf eine Kautschukmischung enthaltend einen Kautschuk, der vulkanisiert ist, wobei der Kautschuk dann naturgemäß in vulkanisierter Form vorliegt. Durch Vulkanisation der Kautschukmischung wird ein Elastomer erhalten, das auch als Gummi bezeichnet wird. Für die Vulkanisation wird in der Regel ein Vernetzersystem verwendet. Die Begriffe "Vulkanisation" und "Vernetzung" werden hier miteinander austauschbar verwendet. Eine Mischung von zwei verschiedenen Kautschuken wird auch als Verschnitt bezeichnet.

Die Einheit phr bedeutet wie allgemein auf dem Gebiet der Kautschuktechnologie bekannt, Gewichstteile des jeweiligen Stoffes pro 100 Gewichtsteile Kautschuk.

Der erfindungsgemäße Schlauch umfasst in dieser Reihenfolge ein isolierendes Innengummi, mindestens eine Festigkeitsträgerlage und ein Außengummi, wobei in einer bevorzugten Ausführungsform zwischen Innengummi und Außengummi mindestens ein elektrischer Heizleiter angeordnet ist.

Das isolierende Innengummi stellt die innerste Schicht des Schlauchs dar, die bei Gebrauch mit dem zu transportierenden Medium in Kontakt kommt. Das Innengummi ist vorzugsweise einschichtig, d.h. zwischen dem Innengummi und der Festigkeitsträgerlage ist vorzugsweise kein zweites Innengummi bzw. keine Zwischenschicht, insbesondere aus einem Gummi oder einem anderen Kunststoff, angeordnet. Dies schließt aber die Anordnung von einem Heizleiter zwischen Innengummi und Festigkeitsträgerlage nicht aus. Das Außengummi schützt den Schlauch vor Umwelteinflüssen.

Das Innengummi ist isolierend. Das Außengummi kann wahlweise isolierend oder nicht isolierend sein. Der Fachmann kann Gummischichten je nach Bedarf als elektrisch isolierende oder elektrisch leitfähige Schichten einstellen. Vulkanisierte Kautschuke an sich sind meist elektrisch isolierende Materialien, wobei das Isoliervermögen je nach Kautschuktyp verschieden sein kann. Durch Einsatz elektrisch leitfähiger Zusatzstoffe, insbesondere elektrisch leitfähiger Füllstoffe wie Graphit oder Leitfähigkeitsruße können die Schichten elektrisch leitfähig eingestellt werden. Um eine isolierende Schicht zu erhalten, reicht es daher in der Regel aus, keine elektrisch leitfähigen Zusatzstoffe wie elektrisch leitfähige Füllstoffe einzusetzen. Zur Herstellung isolierender Gummischichten werden daher, falls eingesetzt, Füllstoffe, die elektrisch leitfähig sind, nicht oder nur in geringen Mengen eingesetzt.

Isolierende Materialien bzw. Gummi sind elektrisch isolierende Materialien bzw. Gummis, die auch als Nichtleiter bezeichnet werden können. Unter isolierenden Innen- oder Außengummis werden dabei vorzugsweise Schichten verstanden, die einen Oberflächenwiderstand von > 10⁶ Ohm, bevorzugter von > 10¹⁰ Ohm und/oder einen Durchgangswiderstand von > 10⁶ Ohm, bevorzugter von > 10¹⁰ Ohm aufweisen. Der Oberflächenwiderstand und der Durchgangswiderstand der Gummischicht können gemäß DIN 53482 bestimmt werden. Der Oberflächenwiderstand ist unter 2.1.4 der DIN 53482 und der Durchgangswiderstand unter 2.1.1 der DIN 53482 beschrieben. Beide Widerstandswerte, d.h. Durchgangswiderstand und Oberflächenwiderstand, der erfindungsgemäß verwendeten Innengummimischung sind vorzugsweise größer als 10¹⁰ Ohm.

Das isolierende Innengummi ist aus einer vulkanisierten Kautschukmischung enthaltend einen Verschnitt aus Ethylen-Propylen-Dien-Kautschuk und Chlorbutylkautschuk. Ethylen-Propylen-Dien-Kautschuke, die üblicherweise als EPDM abgekürzt werden, und Chlorbutylkautschuke, die üblicherweise als CIIR abgekürzt werden, sind übliche, dem Fachmann bekannte Kautschuktypen und im Handel erhältlich. Es können ein oder mehrere EPDM-Kautschuke und ein oder mehrere CIIR-Kautschuke eingesetzt werden.

EPDM-Kautschuke sind Copolymere von Ethen, Propen und mindestens einem nichtkonjugierten Dien, wie z.B. Dicyclopentadien (DCP), Hexadien (HD) oder Ethylidennorbornen (ENB). CIIR-Kautschuke basieren auf Copolymeren von Isobuten und Isopren (Kurzzeichen IIR), die durch Chlorierung von im IIR enthaltenen Doppelbindungen des eingebauten Isoprens modifiziert worden sind.

Das Gewichtsverhältnis von EPDM zu CIIR in der Kautschukmischung für das Innengummi kann in breiten Bereichen variieren. Das Gewichtsverhältnis von EPDM zu CIIR in der Kautschukmischung für das Innengummi kann z.B. im Bereich von 3:1 bis 1:1 liegen. Bei diesem Verschnittverhältnis kann ein optimaler Kompromiss zwischen guter Verarbeitbarkeit und bester Permeationsrate erzielt werden. Unter der Permeationsrate wird die Menge an im Schlauch befindlichen flüssigem Medium verstanden, die bezogen auf die Zeit durch Permeation verloren geht. Diese sollte möglichst niedrig sein.

Es ist im Allgemeinen zweckmäßig, dass der Verschnitt aus EPDM und CIIR mindestens 15 Gew.-% und bevorzugt mindestens 45 Gew.-% des Gesamtgewichts der Kautschukmischung für das Innengummi ausmacht.

Neben dem Verschnitt aus EPDM und CIIR kann die Kautschukmischung für das Innengummi gegebenenfalls weitere Kautschuktypen enthalten, das ist in der Regel aber nicht bevorzugt. Es ist im Allgemeinen bevorzugt, dass mindesten 90 Gew.-% der Kautschukkomponente der Kautschukmischung für das Innengummi der Verschnitt aus EPDM und CIIR sind, wobei die Kautschukkomponente bevorzugter im Wesentlichen aus dem Verschnitt aus EPDM und CIIR besteht. Besonders bevorzugt besteht die Kautschukkomponente der Kautschukmischung für das Innengummi aus dem Verschnitt aus EPDM und CIIR.

Sofern gegebenenfalls auch andere Kautschuke zusätzlich eingesetzt werden, können alle herkömmlichen, dem Fachmann bekannten Kautschuke eingesetzt werden.

In einer bevorzugten Ausführungsform enthält die Kautschukmischung für das Innengummi einen oder mehrere Füllstoffe. Es können die für Kautschukmischungen üblichen Füllstoffe eingesetzt werden. Beispiele für geeignete Füllstoffe sind Ruß und helle Füllstoffe wie Kreide, Kieselsäure, Kaolin, Aluminiumsilikate, Calciumsilikate, Magnesiumsilikate und Kombinationen davon. Als Ruß können eine Reihe von verschiedenen Rußsorten für unterschiedliche Eigenschaften, wie z.B. Verstärkung, Extrudierbarkeit oder Färbung, eingesetzt werden. Die verschiedenen Rußsorten werden üblicherweise nach der ASTM-Norm klassifiziert. Beispiele für geeignete Rußsorten gemäß den ASTM-Bezeichnungen sind FEF-, GPF-, HAF-, SRF-, Flamm-, MT-Ruße und Kombinationen davon. FEF-Ruß, SRF-Ruß und Kombinationen davon eignen sich dabei für die Verstärkung. MT-Ruß verbessert die Extrusionsfähigkeit. Die Füllstoffe können auch als oberflächenmodifizierte Variante eingesetzt werden. Eine Oberflächenmodifizierung eines Füllstoffs kann z.B. durch Umsetzung des Füllstoffs mit einem oder mehreren Silanen erfolgen.

In einer bevorzugten Ausführungsform umfasst die Kautschukmischung für das Innengummi mindestens zwei Füllstoffe, von denen mindestens ein Füllstoff ein Ruß ist. Der zweite oder jeder weitere Füllstoff kann dann ein anderer Ruß oder ein heller Füllstoff sein. In einer bevorzugten Ausführungsform werden mindestens ein heller Füllstoff und mindestens ein dunkler Füllstoff kombiniert. Bei den dunklen Füllstoffen handelt es sich um Ruß, alle anderen Füllstoffe werden als helle Füllstoffe bezeichnet.

Der Mengenanteil an Füllstoff in der Kautschukmischung für das Innengummi kann in breiten Bereichen variieren und z.B. im Bereich von 30 phr bis 250 phr und bevorzugt von 30 phr bis 70 phr liegen.

Die Kautschukmischung für das Innengummi enthält ferner vorzugsweise ein Vernetzersystem. Bei dem Vernetzersystem kann es sich um ein oder mehrere Vernetzungsmittel oder um eine Kombination von Vernetzungsmittel und einem oder mehreren Coagenzien, die z.B. als Aktivatoren oder Beschleuniger dienen können, handeln.

Beispiele für geeignete Vernetzungsmittel für die Kautschukmischung für das Innengummi sind Schwefel oder Schwefel-spendende Verbindungen, Peroxide und Phenolharze und Kombinationen davon. Beispiele für geeignete Peroxide sind Alkylaralkylperoxide, Diaralkylperoxide, Peroxyketale, Peroxyester und Kombinationen davon, wie z.B. Dicumylperoxid, Bis(tert-butylperoxyisopropyl)-benzol und 2,5-Bis(tert-butylperoxy)-2,5-dimethylhexan. Beispiele für Phenolharze sind Alkylphenolharze wie Methylolphenolharze. Coagenzien, die für die jeweiligen Vernetzungsmittel geeignet sind, sind dem Fachmann geläufig und er kann sie nach Bedarf auswählen.

Beispiele für Coagenzien für Vernetzungsmittel, insbesondere für Peroxide, sind Allylverbindungen, z.B. Triallylcyanurat (TAC), Triallylisocyanurat (TAIC), Triallylphosphat (TAP), Triallyltrimellitat (TATM), Diallylidenpentaerythrit (DAPE), Diallyterephthalat (DATP); Methacrylate, z.B. Butylenglycoldimethacrylat (BDMA), Ethylenglycoldimethacrylat (EDMA), Triethylenglycoldimethacrylat (TEDMA) und Trimethylopropantrimethacrylat (TRIM); Zinksalze von Methacrylsäure (ZDMA); Polybutadien (BR), insbesondere 1,2-BR; N,N'-m-Phenylendimaleimid (PDM); und Kombinationen der genannten Coagenzien.

Besonders bevorzugt werden für die Kautschukmischung für das Innengummi als Vernetzungsmittel ein oder mehrere Peroxide eingesetzt. Bevorzugte Coagenzien, insbesondere bei Verwendung von Peroxiden, sind Triallylcyanurat (TAC), Triallylisocyanurat (TAIC), Trimethylopropantrimethacrylat (TRIM) und Kombinationen davon.

Der Mengenanteil an Vernetzungsmittel in der Kautschukmischung für das Innengummi kann in Abhängigkeit von der Art des Vernetzungsmittels in breiten Bereichen variieren und z.B. im Bereich von 2 phr bis 8 phr und bevorzugt von 3 phr bis 5 phr liegen.

Die Kautschukmischung für das Innengummi kann ferner nach Bedarf weitere Additive enthalten, die auf dem Gebiet der Kautschukmischung üblich sind. Beispiele für gegebenenfalls eingesetzte weitere herkömmliche Additive sind Weichmacher, Metalloxide, Alterungsschutzmittel, Stabilisatoren, Verzögerer, Verarbeitungshilfsmittel, UV-Schutzmittel, Trennmittel, Haftvermittler, Fasern, Farbpigmente, Klebrigmacher, Gleitmittel und Dispergiermittel.

Der erfindungsgemäße Schlauch umfasst ferner mindestens eine Festigkeitsträgerlage, die zur Aufnahme der Druckbelastung dient. Hierfür können alle üblichen, auf dem Gebiet der Schlauchherstellung bekannten Festigkeitsträgerlagen eingesetzt werden. Der Schlauch kann eine oder mehrere Festigkeitsträgerlagen, z.B. ein oder zwei Festigkeitsträgerlagen enthalten.

Bei der Festigkeitsträgerlage kann es sich um ein Gewebe, Geflecht, Gewirke oder Gestrick handeln, vorzugsweise aus einem textilen Material. Die Festigkeitsträgerlage ist bevorzugt ein Geflecht, z.B. ein Textilgeflecht, Stahlgeflecht oder Glasgeflecht, wobei ein Textilgeflecht besonders bevorzugt ist. Textilgeflechte basieren auf natürlichen und/oder künstlichen Fasern bzw. Garnen, die mit einem Flechtverfahren auf das Innengummi oder eine gegebenenfalls vorhandene, aber nicht bevorzugte Zwischenschicht bzw. zweites Innengummi aufgebracht werden. Die Haftung zwischen der oder den Festigkeitsträgerlagen und den Gummischichten kann zweckmäßiger durch Haftvermittler verbessert werden, die in den Kautschukmischungen enthalten sind oder in Form einer Haftvermittlerlösung auf die jeweiligen Schichten und/oder Fasern aufgebracht werden.

Die Fasern bzw. Garne für den textilen Festigkeitsträger, insbesondere für das Textilgeflecht, können z.B. aus Polyamid (PA), Polyimid (PI), Aramid, insbesondere para-Aramid oder meta-Aramid, Polyvinylacetal (PVA), Polyvinylalkohol (PVAL), Baumwolle (CO), Modal (CMD), Rayon (CV), Polyetheretherketon (PEEK), Polyester, insbesondere Polyethylentherephthalat (PET) oder Polyethylen-2,6-naphthalat (PEN), Polysulfon (PSU), Polyoxadiazol (POD), Polybenzoxazol (PBO), Polyphenylen oder einem Polyphenylenderivat, insbesondere ein Polyphenylensulfid (PPS), sein. Auch Hybridsysteme, z.B. in Form eines Mischzwirns aus zwei oder mehr der genannten Materialien können zum Einsatz gelangen.

Die Fasern bzw. Garne für den textilen Festigkeitsträger, insbesondere für das Textilgeflechts, sind bevorzugt aus Polyamid (PA) und besonders bevorzugt aus Polyamid 6.6.

Der Schlauch umfasst ferner ein Außengummi aus einer vulkanisierten Kautschukmischung enthaltend Ethylen-Propylen-Dien-Kautschuk (EPDM-Kautschuk). Es können ein oder mehrere EPDM-Kautschuke eingesetzt werden. EPDM-Kautschuke wurden bereits vorstehend bezüglich des Innengummis beschrieben. Das Außengummi kann ein isolierendes oder ein nicht isolierendes Außengummi sein.

Es ist im Allgemeinen zweckmäßig, dass EPDM-Kautschuk mindestens 10 Gew.-% und bevorzugt mindestens 50 Gew.-% des Gesamtgewichts der Kautschukmischung für das Außengummi ausmacht.

Der EPDM-Kautschuk kann in der Kautschukmischung für das Außengummi gegebenenfalls im Verschnitt mit weiteren Kautschuktypen verwendet werden. In Regel ist es aber bevorzugt, EPDM-Kautschuk im Wesentlichen verschnittfrei einzusetzen. Es ist im Allgemeinen bevorzugt, dass mindesten 90 Gew.-% der Kautschukkomponente der Kautschukmischung für das Außengummi EPDM-Kautschuk sind, wobei die Kautschukkomponente bevorzugter im Wesentlichen aus EPDM-Kautschuk besteht. Besonders bevorzugt besteht die Kautschukkomponente für das Außengummi aus EPDM-Kautschuk.

Sofern auch andere Kautschuke zusätzlich eingesetzt werden, können alle herkömmlichen, dem Fachmann bekannten Kautschuke eingesetzt werden.

In einer bevorzugten Ausführungsform enthält die Kautschukmischung für das Außengummi einen oder mehrere Füllstoffe. Es können die für Kautschukmischungen üblichen Füllstoffe eingesetzt werden. Für Beispiele wird auf die vorstehend genannten Beispiele bei der Beschreibung des Innengummis verwiesen. Bevorzugte Füllstoffe, die in der Kautschukmischung für das Außengummi eingesetzt werden sind verstärkende und nicht verstärkende Füllstoffe.

Der Mengenanteil an Füllstoff in der Kautschukmischung für das Außengummi kann in breiten Bereichen variieren und z.B. im Bereich von 30 phr bis 250 phr und bevorzugt von 30 phr bis 70 phr liegen.

Die Kautschukmischung für das Außengummi enthält ferner vorzugsweise ein Vernetzersystem, d.h. ein oder mehrere Vernetzungsmittel oder eine Kombination von Vernetzungsmittel und einem oder mehreren Coagenzien. Für Beispiele für geeignete Vernetzungsmittel und/oder Coagenzien wird auf die für das Innengummi genannten Beispiele verwiesen.

Es können z.B. Schwefel oder eine oder mehrere Schwefel-spendende Verbindungen als Vernetzer eingesetzt werden. Besonders bevorzugt werden für die Kautschukmischung für das Außengummi als Vernetzungsmittel ein oder mehrere Peroxide eingesetzt. Bevorzugte Coagenzien, insbesondere bei Verwendung von Peroxiden, sind Triallylcyanurat (TAC), Triallylisocyanurat (TAIC), Trimethylopropantrimethacrylat (TRIM) und Kombinationen davon.

Bei der besonders bevorzugten Ausführungsform, bei der die Kautschukmischung für das Außengummi peroxidisch vernetzt wird, ist das erhaltene Vulkanisat im Vergleich zu Vernetzungen mit einem anderen Vernetzungsmittel wie Schwefel oder Schwefel-spendenden Verbindungen, deutlich temperaturbeständiger, d.h. das Gummimaterial bleibt auch bei höheren Temperaturen noch sehr lange flexibel.

Der Mengenanteil an Vernetzungsmittel in der Kautschukmischung für das Außengummi kann in Abhängigkeit von der Art des Vernetzungsmittels in breiten Bereichen variieren und z.B. im Bereich von 2 phr bis 8 phr und bevorzugt von 3 phr bis 5 phr liegen, insbesondere wenn als Vernetzungsmittel Peroxid eingesetzt wird.

Die Kautschukmischung für das Außengummi kann ferner nach Bedarf weitere Additive enthalten, die auf dem Gebiet der Kautschukmischung üblich sind. Als Beispiele für gegebenenfalls eingesetzte weitere herkömmliche Additive wird auf die Beispiele verwiesen, die diesbezüglich für die Kautschukmischung für das Innengummi genannt wurden.

Die Kautschukmischungen von Innengummi und Außengummi werden nach der Formung in üblicher Weise gesondert voneinander oder vorzugsweise gemeinsam vulkanisiert, z.B. bei erhöhter Temperatur und/oder erhöhten Druck, z.B. mittels Dampf. Durch die Vulkanisation wird aus der Kautschukmischung das Gummi bzw. das Elastomer gebildet. Die Bedingungen für die Vulkanisation sind dem Fachmann geläufig.

In einer besonders bevorzugten Ausführungsform umfasst der Schlauch, insbesondere der SCR-Schlauch, ferner mindestens einen elektrischen Heizleiter. Auf diese Weise wird ein beheizbarer Schlauch erhalten. Solche Heizleiter für Schlauchanwendungen sind bekannt und im Handel erhältlich. Der oder die elektrischen Heizleiter sind zwischen dem Innengummi und dem Außengummi angeordnet. Es können ein oder mehrere Heizleiter in dem Schlauch angeordnet sein. Der Heizleiter basiert auf einem elektrisch leitfähigen Material, gewöhnlich einem Metall oder einer Metalllegierung, wobei Materialien mit einem relativ hohen spezifischen elektrischen Widerstand eingesetzt werden können.

Der elektrische Heizleiter kann aus einem elektrisch leitfähigen Draht oder einer Litze gebildet werden, wobei eine Litze bevorzugt ist. In diesem Fall sorgen das isolierende Innengummi und die isolierende Ummantelung für die notwendige Isolierung. Im Allgemeinen ist es bevorzugt, dass der elektrische Heizleiter einen elektrisch leitfähigen Draht oder eine Litze umfasst, der bzw. die mit einem elektrisch isolierenden Material, z.B. einem elektrisch isolierenden Kunststoff, ummantelt ist. Auf diese Weise ist eine bessere Isolierung des Heizleiters gewährleistet.

Der elektrische Heizleiter ist zwischen dem Innengummi und dem Außengummi angeordnet, wobei er zwischen Innengummi und Festigkeitsträgerlage oder zwischen Festigkeitsträgerlage und Außengummi angeordnet sein kann. Er kann auch in die Festigkeitsträgerlage oder zwischen die Festigkeitsträgerlagen eingearbeitet sein. Vorzugsweise werden der oder die elektrischen Heizleiter auf der oder den Festigkeitsträgerlagen angebracht und sind somit zwischen der oder den Festigkeitsträgerlagen und Außengummi angeordnet. Auf diese Weise können die Enden des Heizleiters ohne Beschädigung des Festigkeitsträgers aus dem Schlauch herausgelöst werden.

Der Heizleiter erstreckt sich im Allgemeinen zumindest über einen Teil der Schlauchlänge. Der Heizleiter kann z.B. wendelförmig um das Innengummi oder die Festigkeitsträgerlage gewickelt werden. Die beiden Enden des Heizleiters können nach Fertigstellung des Schlauchs in einfacher Weise aus dem Schlauch herausgelöst werden und mit einer elektrischen Anschlussvorrichtung verbunden werden, über die eine Spannungsquelle angeschlossen werden kann. Für weitere zweckmäßige Ausgestaltungen bezüglich des Heizleiters im Schlauch kann z.B. auf die DE-A1-10201920 Bezug genommen werden.

Der Schlauch kann in herkömmlicher Weise hergestellt werden. Da der Schlauchaufbau relativ einfach ist, kann die Schlauchfertigung vorteilhafterweise kontinuierlich in einer Produktionslinie durchgeführt werden. Dies ist einfach und kostensparend.

Das Verfahren zur Herstellung des Schlauchs umfasst z.B. das Bilden einer Innenschicht aus der vulkanisierbaren Kautschukmischung für das Innengummi mittels Extrusion in Schlauchform in üblicher Weise, das Aufbringen der mindestens einen Festigkeitsträgerlage auf den gebildeten Schlauch, z.B. durch Stricken, Wendeln oder Flechten, gegebenenfalls das Aufbringen des oder der Heizleiter, z.B. durch Wendeln oder Wickeln, das Aufextrudieren der vulkanisierbaren Kautschukmischung für das Außengummi auf die Festigkeitsträgerlage und gegebenenfalls den Heizleiter, um einen Rohling zu erhalten, und das Vulkanisieren der Kautschukmischungen im Rohling, um den erfindungsgemäßen Schlauch zu erhalten. Wie bereits erläutert kann der optionale Heizleiter stattdessen auch vor oder mit der Festigkeitsträgerlage auf die Innenschicht aufgebracht werden. Das beschriebene Verfahren kann kontinuierlich in einer entsprechenden Produktionslinie durchgeführt werden.

Der Schlauch ist allgemein für den Transport von flüssigen Medien geeignet. Da der Schlauch chemisch beständig und wenig quellfähig ist, eignet er sich auch für Medien, die relativ aggressive Chemikalien enthalten oder sind.

Der erfindungsgemäße Schlauch zeigt insbesondere gegen Harnstoff und dessen wässrigen Lösungen eine ausgezeichnete chemische Beständigkeit und praktisch kein Quellvermögen. Auch eine Extraktion von Stoffen aus dem Schlauch durch wässrige Harnstofflösungen ist nicht oder nur in geringem Umfang festzustellen.

Der Schlauch eignet sich daher besonders bevorzugt als SCR-Schlauch und insbesondere als beheizbarer SCR-Schlauch, sofern der Schlauch auch einen Heizleiter umfasst. Unter einem SCR-Schlauch oder einem beheizbaren SCR-Schlauch werden Schläuche verstanden, die beim SCR-Verfahren verwendet werden, insbesondere für den Transport von wässrigen Harnstofflösungen, wobei beim SCR-Verfahren wie eingangs beschrieben Stickoxide in Abgasen in selektiver Weise katalytisch reduziert werden, insbesondere in Fahrzeugen, wie Nutzfahrzeugen, wie Lkws oder Omnibussen, oder Pkws. Der Schlauch wird besonders bevorzugt für den Transport von wässrigen Harnstofflösungen verwendet, insbesondere als SCR-Schlauch.

Die Erfindung wird nun anhand eines Ausführungsbeispiels unter Bezugnahme auf eine schematische Zeichnung näher erläutert.

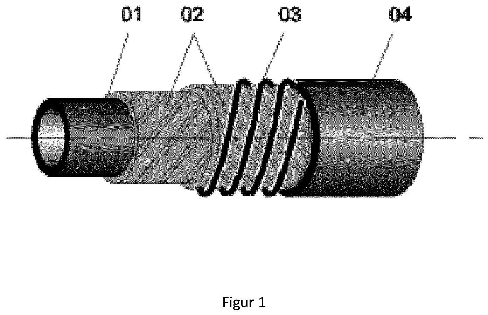

Fig. 1 zeigt einen erfindungsgemäßen Schlauch in schematischer Darstellung. Der in Fig. 1 gezeigte Schlauch umfasst ein isolierendes Innengummi 1 aus einer vulkanisierten Kautschukmischung, dessen Kautschukkomponente aus einem Verschnitt von EPDM und CIIR besteht. Der Durchgangswiderstand und der Oberflächenwiderstand des Innengummis sind jeweils größer als 10¹⁰ Ohm. Über dem Innengummi sind Festigkeitsträger 2 aus einem Polyamid-Textilgeflecht angeordnet. Darüber befindet sich eine Drahtwendel aus Metall mit einer isolierenden Ummantelung als Heizleiter 3. Darüber ist ein Außengummi 4 aus einer vulkanisierten Kautschukmischung, dessen Kautschukkomponente aus EPDM besteht, angeordnet.

### Bezugszeichenliste

- 1: Innengummi
- 2: Festigkeitsträger
- 3: Heizleiter
- 4: Außengummi

## Patentansprüche

1. Schlauch, umfassend in dieser Reihenfolge
a) ein isolierendes Innengummi aus einer vulkanisierten Kautschukmischung enthaltend einen Verschnitt aus Ethylen-Propylen-Dien-Kautschuk und Chlorbutylkautschuk,
b) mindestens eine Festigkeitsträgerlage und
c) ein Außengummi aus einer vulkanisierten Kautschukmischung enthaltend Ethylen-Propylen-Dien-Kautschuk.

2. Schlauch nach Anspruch 1, wobei zwischen Innengummi und Außengummi, vorzugsweise zwischen der oder den Festigkeitsträgerlagen und dem Außengummi, mindestens ein elektrischer Heizleiter angeordnet ist.

3. Schlauch nach Anspruch 1 oder Anspruch 2, wobei das Gewichtsverhältnis von Ethylen-Propylen-Dien-Kautschuk zu Chlorbutylkautschuk in der Kautschukmischung für das Innengummi im Bereich von 3:1 bis 1:1 liegt.

4. Schlauch nach irgendeinem der Ansprüche 1 bis 3, wobei die Kautschukmischung für das Innengummi mindestens zwei Füllstoffe umfasst, wobei ein Füllstoff vorzugsweise ein Ruß ist.

5. Schlauch nach irgendeinem der Ansprüche 1 bis 4, wobei die Festigkeitsträgerlage aus einem Textilgeflecht, vorzugsweise einem Polyamid-Textilgeflecht, gebildet ist.

6. Schlauch nach irgendeinem der Ansprüche 1 bis 5, wobei das Innengummi einschichtig ist.

7. Schlauch nach irgendeinem der Ansprüche 1 bis 6, wobei die vulkanisierte Kautschukmischung des Außengummis eine mit einem oder mehreren Peroxiden als Vernetzungsmittel vulkanisierte Kautschukmischung ist.

8. Schlauch nach irgendeinem der Ansprüche 1 bis 7, wobei die vulkanisierte Kautschukmischung des Innengummis eine mit einem oder mehreren Peroxiden als Vernetzungsmittel vulkanisierte Kautschukmischung ist.

9. Schlauch nach irgendeinem der Ansprüche 1 bis 8, wobei die Kautschukkomponente der Kautschukmischung des Innengummis im Wesentlichen aus einem Verschnitt aus Ethylen-Propylen-Dien-Kautschuk und Chlorbutylkautschuk besteht und/oder die Kautschukkomponente der Kautschukmischung des Außengummis im wesentlichen aus Ethylen-Propylen-Dien-Kautschuk besteht.

10. Schlauch nach irgendeinem der Ansprüche 1 bis 9, wobei der Schlauch ein SCR-Schlauch ist.

11. Verwendung eines Schlauchs nach irgendeinem der Ansprüche 1 bis 10 für den Transport von wässrigen Harnstofflösungen, insbesondere in einem Fahrzeug.

12. Verwendung nach Anspruch 11, wobei der Schlauch in einem SCR-Verfahren eingesetzt wird.

13. Verfahren zur Herstellung eines Schlauchs nach irgendeinem der Ansprüche 1 bis 10, umfassend
a) Extrudieren einer vulkanisierbaren Kautschukmischung enthaltend einen Verschnitt aus Ethylen-Propylen-Dien-Kautschuk und Chlorbutylkautschuk für das Innengummi in Schlauchform,
b) Aufbringen mindestens einer Festigkeitsträgerlage auf den gebildeten Schlauch,
c) Aufextrudieren einer vulkanisierbaren Kautschukmischung enthaltend Ethylen-Propylen-Dien-Kautschuk für das Außengummi auf die Festigkeitsträgerlage, und
d) Vulkanisieren des so erhaltenen Rohlings,
wobei es sich vorzugsweise um ein kontinuierliches Verfahren handelt.

14. Verfahren nach Anspruch 13, wobei nach dem Schritt b) mindestens ein elektrischer Heizleiter auf die Festigkeitsträgerlage aufgebracht wird.

## Claims

1. Hose comprising, in this sequence,
a) an insulating internal rubber made of a vulcanized rubber mixture comprising a blend of ethylene-propylene-diene rubber and chlorobutyl rubber,
b) at least one reinforcement layer, and
c) an external rubber made of a vulcanized rubber mixture comprising ethylene-propylene-diene rubber.

2. Hose according to Claim 1, where between internal rubber and external rubber, preferably between the reinforcement layer(s) and the external rubber, the arrangement has at least one electrical heating conductor.

3. Hose according to Claim 1 or Claim 2, where the ratio by weight of ethylene-propylene-diene rubber to chlorobutyl rubber in the rubber mixture for the internal rubber is in the range from 3:1 to 1:1.

4. Hose according to any of Claims 1 to 3, where the rubber mixture for the internal rubber comprises at least two fillers, where one filler is preferably a carbon black.

5. Hose according to any of Claims 1 to 4, where the reinforcement layer is composed of a braided textile, preferably a braided polyamide textile.

6. Hose according to any of Claims 1 to 5, where the internal rubber is single-layer.

7. Hose according to any of Claims 1 to 6, where the vulcanized rubber mixture of the external rubber is a rubber mixture vulcanized with one or more peroxides as crosslinking agent.

8. Hose according to any of Claims 1 to 7, where the vulcanized rubber mixture of the internal rubber is a rubber mixture vulcanized with one or more peroxides as crosslinking agent.

9. Hose according to any of Claims 1 to 8, where the rubber component of the rubber mixture of the internal rubber consists essentially of a blend of ethylene-propylene-diene rubber and chlorobutyl rubber, and/or the rubber component of the rubber mixture of the external rubber consists essentially of ethylene-propylene-diene rubber.

10. Hose according to any of Claims 1 to 9, where the hose is an SCR hose.

11. Use of a hose according to any of Claims 1 to 10 for the transport of aqueous urea solutions, in particular in a vehicle.

12. Use according to Claim 11, where the hose is used in an SCR process.

13. Process for the production of a hose according to any of Claims 1 to 10, comprising
a) extrusion of a vulcanizable rubber mixture comprising a blend of ethylene-propylene-diene rubber and chlorobutyl rubber for the internal rubber in the form of a hose,
b) application of at least one reinforcement layer onto the resultant hose,
c) application, by extrusion, of a vulcanizable rubber mixture comprising ethylene-propylene-diene rubber for the external rubber onto the reinforcement layer, and
d) vulcanization of the resultant perform,
where the process is preferably continuous.

14. Process according to Claim 13, where at least one electrical heating conductor is applied onto the reinforcement layer after the step b).

## Revendications

1. Flexible, comprenant dans cet ordre
a) un caoutchouc intérieur isolant en un mélange de caoutchouc vulcanisé contenant un mélange de caoutchouc d'éthylène-propylène-diène et de caoutchouc de chlorobutyle,
b) au moins une couche de renfort, et
c) un caoutchouc extérieur en un mélange de caoutchouc vulcanisé contenant un caoutchouc d'éthylène-propylène-diène.

2. Flexible selon la revendication 1, dans lequel au moins un conducteur chauffant électrique est agencé entre le caoutchouc intérieur et le caoutchouc extérieur, de préférence entre la ou les couches de renfort et le caoutchouc extérieur.

3. Flexible selon la revendication 1 ou la revendication 2, dans lequel le rapport en poids entre le caoutchouc d'éthylène-propylène-diène et le caoutchouc de chlorobutyle dans le mélange de caoutchouc pour le caoutchouc intérieur se situe dans la plage allant de 3:1 à 1:1.

4. Flexible selon l'une quelconque des revendications 1 à 3, dans lequel le mélange de caoutchouc pour le caoutchouc intérieur comprend au moins deux charges, une charge étant de préférence un noir de carbone.

5. Flexible selon l'une quelconque des revendications 1 à 4, dans lequel la couche de renfort est formée en une tresse textile, de préférence en une tresse textile de polyamide.

6. Flexible selon l'une quelconque des revendications 1 à 5, dans lequel le caoutchouc intérieur est monocouche.

7. Flexible selon l'une quelconque des revendications 1 à 6, dans lequel le mélange de caoutchouc vulcanisé du caoutchouc extérieur est un mélange de caoutchouc vulcanisé avec un ou plusieurs peroxydes en tant qu'agents de réticulation.

8. Flexible selon l'une quelconque des revendications 1 à 7, dans lequel le mélange de caoutchouc vulcanisé du caoutchouc intérieur est un mélange de caoutchouc vulcanisé avec un ou plusieurs peroxydes en tant qu'agents de réticulation.

9. Flexible selon l'une quelconque des revendications 1 à 8, dans lequel le composant caoutchouc du mélange de caoutchouc du caoutchouc intérieur est essentiellement constitué d'un mélange de caoutchouc d'éthylène-propylène-diène et de caoutchouc de chlorobutyle, et/ou le composant caoutchouc du mélange de caoutchouc du caoutchouc extérieur est essentiellement constitué par un caoutchouc d'éthylène-propylène-diène.

10. Flexible selon l'une quelconque des revendications 1 à 9, dans lequel le flexible est un flexible de SCR.

11. Utilisation d'un flexible selon l'une quelconque des revendications 1 à 10 pour le transport de solutions aqueuses d'urée, notamment dans un véhicule.

12. Utilisation selon la revendication 11, dans laquelle le flexible est utilisé dans un procédé de SCR.

13. Procédé de fabrication d'un flexible selon l'une quelconque des revendications 1 à 10, comprenant
a) l'extrusion d'un mélange de caoutchouc vulcanisable contenant un mélange de caoutchouc d'éthylène-propylène-diène et de caoutchouc de chlorobutyle pour le caoutchouc intérieur sous la forme d'un flexible,
b) l'application d'au moins une couche de renfort sur le flexible formé,
c) l'extrusion d'un mélange de caoutchouc vulcanisable contenant un caoutchouc d'éthylène-propylène-diène pour le caoutchouc extérieur sur la couche de renfort, et
d) la vulcanisation de l'ébauche ainsi obtenue,
le procédé étant de préférence un procédé continu.

14. Procédé selon la revendication 13, dans lequel au moins un conducteur chauffant électrique est appliqué sur la couche de renfort après l'étape b).
